# EUROPÄISCHE PATENTSCHRIFT

(11) **EP 1 613 861 B1**
(45) Veröffentlichungstag und Bekanntmachung des Hinweises auf die Patenterteilung: **25.07.2012**
(21) Anmeldenummer: 04725870.2
(22) Anmeldetag: 06.04.2004
(51) Int. Cl.: F03D 9/00, H01L 31/045, H01L 31/058, F24J 2/54

(54) **VERSORGUNGSEINHEIT FÜR STROM UND WASSER AUF DER BASIS ERNEUERBARER ENERGIEN**
SUPPLY UNIT FOR POWER AND WATER BASED ON RENEWABLE ENERGY
UNITE D'ALIMENTATION DE COURANT ET D'EAU A BASE D'ENERGIES RENOUVELABLES

(30) Priorität: 07.04.2003 CH 635032003
(43) Veröffentlichungstag der Anmeldung: 11.01.2006
(73) Patentinhaber: Roth & Messmer Security Team GmbH, 9403 Goldach (CH)
(72) Erfinder: Niederer, Robert, 6863 Besazio (CH)
(74) Vertreter: Felber, Josef
(86) Internationale Anmeldenummer: PCT/CH2004/000215
(87) Internationale Veröffentlichungsnummer: WO 2004/090327

(56) Entgegenhaltungen:
- WO-A-94/20802
- WO-A-98/42981
- WO-A-03/008803
- WO-A-03/031341
- WO-A-2004/063567
- AU-B- 704 168
- DE-A- 3 405 466
- DE-A- 19 608 330
- DE-U- 8 438 377
- DE-U- 29 900 391
- US-A- 4 145 021
- US-A- 4 421 943
- US-A- 5 969 501
- PATENT ABSTRACTS OF JAPAN Bd. 1999, Nr. 13, 30. November 1999 (1999-11-30) & JP 11 210192 A (YASKAWA ELECTRIC CORP), 3. August 1999 (1999-08-03)

## Beschreibung

Diese Erfindung betrifft eine Energie- und Wasserversorgungseinheit, mittels derer ein Haus, eine Hütte oder eine Baustelle autark von der öffentlichen oder einer privatrechtlichen Energie- und Wasserversorgung mit elektrischem Strom und je nach Situation auch mit hinreichend Trinkwasser versorgbar ist. Als Energie zum Betrieb dieser Versorgungseinheit dient das Sonnenlicht und der Wind, und das Wasser wird entweder von einem naheliegenden Gewässer oder vom Grundwasser entnommen.

Für den alltäglichen Gebrauch und Unterhalt einer Familie, die in einer Wohnung oder in einem einfachen Haus lebt, erweisen sich ca. 25kWh als hinreichende tägliche elektrische Energiemenge, um die üblichen elektrischen Geräte wie Staubsauger, Kochpfanne, Rasierapparate, Küchenmaschinen, Gefrierschrank, Kühlschrank etc. zu betreiben. Ein Haushaltstaubsauger hat eine Leistungsaufnahme von ca. 1'000 W und daher reichen 25kWh zum Betreiben eines Staubsaugers rund um die Uhr, was eine gute Vorstellung von der Energiemenge gibt, von der hier gesprochen wird. Während naturgemäss in kälteren Klimazonen der Energiebedarf grösser ist als in milden Zonen und wiederum in ganz heissen Klimazonen der Energiebedarf ebenfalls grösser ist, wenn der Wohnraum gekühlt wird, steht doch in den heisseren Klimazonen eine stärkere und in der Regel auch eine längere Sonneneinstrahlung zur Verfügung. In vielen kälteren Klimazonen hingegen blasen oftmals regelmässige Winde, die als Energiespender ausgenützt werden können. Sonnen- und Windenergie können sich deshalb in vielen Fällen ergänzen.

Nachfolgend wird ein Überblick über den Stromverbrauch einiger typischer Geräte gegeben, wie sie etwa in einem Ein- oder Mehrpersonenhaushalt üblicherweise betrieben werden. Dabei werden die Verbräuche zu jedem Gerät bzw. Gerätetyp für jeweils einen 1-, 2-, 3- und 4-Personenhaushalt angegeben, und zwar für einen Haushalt in der mitteleuropäischen Klimazone. Quelle: Haushaltstromverbrauch 1997, Verband der Elektrizitätswirtschaft (VDEW), Stresemannallee 23, D-60596 Frankfurt am Main:

| **Gerät/Anwendung** | **Jahres-Stromverbrauch einzelner Geräte in kWh gemäss der Anzahl der Personen im Haushalt** | | | |
|---|---|---|---|---|
| ***Anzahl Personen im Haushalt*** | ***1*** | ***2*** | ***3*** | ***4*** |
| Elektroherd | 210 | 405 | 465 | 600 |
| 1 Kühlschrank | 290 | 320 | 340 | 370 |
| 1 Gefriergerät | 310 | 360 | 430 | 435 |
| Waschmaschine | 80 | 140 | 220 | 300 |
| Geschirrspüler | 130 | 210 | 260 | 430 |
| Warmwasser Bad | 470 | 780 | 1080 | 1390 |
| Warmwasser Küche (ohne Geschirrspüler) | 250 | 300 | 350 | 420 |
| Summe Warmwasser inkl. Geschirrspüler | 720 | 1080 | 1430 | 1810 |
| 1 Fernseher | 110 | 140 | 175 | 190 |
| Hilfsgerät für die Zentralheizung/Etagenheizung | 250 | 290 | 330 | 370 |
| Licht | 200 | 295 | 340 | 450 |
| Sonstiges wie Radio, Kleingeräte, Hobby- und Heimwerkergeräte | 290 | 450 | 520 | 600 |
| Totaler Stromverbrauch pro Jahr | 3310 | 4770 | 5940 | 7365 |
| **Ø *Gesamtstromverbrauch pro Tag*** | **9,07** | ***13, 07*** | **16,27** | ***20,18*** |

Man erkennt also, dass eine durchschnittliche Energiemenge von 20.18 kWh pro Tag ausreicht, um ein vierköpfige Familie mit allem Nötigen zu versorgen. Nicht mit eingerechnet ist hier die Wasserversorgung. Das Heraufpumpen und Bereitstellen von Wasser benötigt jedoch nur noch vergleichsweise wenig zusätzliche Energie.

Während heutzutage die Energieversorgung zumindest in den Industriestaaten und den Schwellenländern zentral von Elektrizitätswerken sichergestellt wird, ist dies in vielen Entwicklungsländern nicht oder noch nicht der Fall. Grosse Teile der Weltbevölkerung warten auf einen Stromanschluss und wären heilfroh um eine entsprechende Verbesserung ihrer Lebensumstände. Mit einer Energie- und Wasserversorgung könnte ihnen eine ganz Menge von Arbeiten erleichtert werden und ihre Hygiene und ihr Gesundheitszustand könnte dank einer hinreichenden Wasserversorgung drastisch verbessert werden. Das Wasser ist oftmals in Brunnen oder entfernten Wasserstellen vorhanden, jedoch ist die Bereitstellung überaus mühsam. Das Wasser wird oftmals von Hand aus einem Brunnen gepumpt oder von einer Wasserquelle geholt und über weite Strecken zu den Behausungen getragen. Ausserdem ist die Qualität des Wassers oft nicht einwandfrei oder sogar bedenklich. Aber nicht nur in armen und unterentwickelten Ländern allgemein, sondern auch in entlegenen Siedlungsgebieten oder in Berg- und Wüstengebieten, in Naturparks, an Stränden und in Erholungsgebieten etc. fehlt es oftmals an Strom und Wasser. Es gibt auch temporären lokalen Bedarf für Strom und Wasser, nicht nur in Entwicklungs- und Schwellenländern, sondern auch in den Industrieländern, etwa bei irgendwelchen Veranstaltungen in der freien Natur, bei Unglücksfällen und Naturkatastrophen oder gar bei kriegerischen Ereignissen, wenn das öffentliche Stromversorgung zusammengefallen ist und die zugehörige Infrastruktur zerstört ist. Bisher behilft man sich mit Notstromgruppen, die mit einem Dieselmotor betrieben werden. In einigen Ländern, wo die öffentliche Stromversorgung wenig zuverlässig ist, stehen in vielen Häusern und Geschäftsbetrieben solche Aggregate, um im Notfall einzuspringen, oder es wird gar permanent in dieser Weise elektrischer Strom erzeugt. Man denkt etwa an schnell wachsende Städte in gewissen Ländern, wo die Auspuffrohre direkt in die Strasse hinausmünden und Rauch und Gestank verbreiten. Aus der US-A-4 421 943 ist eine transportable Energiestation bekanntgeworden, die aus Sonnen- und Windenergie elektrische Energie erzeugt und bereitstellt. Die Station vermag aber nicht gleichzeitig die Bedürfnisse für Wasser und Stromversorgung sicherzustellen, sondern ist einzig zur Lieferung von elektrischem Strom gedacht. Sie vermag weder Wasser zu pumpen noch schmutziges Wasser zu Trinkwasser aufzubereiten, sodass bedarfsweise und rasch entweder das eine oder das andere bereitgestellt werden kann, oder auch beides gleichzeitig. Für abgelegene Gebiete zum Beispiel, wo es weder elektrischen Strom gibt noch eine Trinkwasserversorgung existiert, und wo auch keine ausgebildeten Fachleute für das Erstellen einer Trinkwasseraufbereitung und zum Betreiben und Warten einer komplexen Anlage verfügbar sind, fehlen bei dieser Energiestation wichtige Komponenten. Sie kann vor Ort nicht einfach hingestellt, aufgestellt und in Betrieb genommen werden, sodass wahlweise Strom und/oder Trinkwasser zur Verfügung steht, selbst wenn nur schmutziges Wasser in einem nahen Tümpel oder einem ausgegrabenen Brunnen verfügbar ist.
Auch die US-A-5 969 501 zeigt eine transportable Energieversorgungsstation, im wesentlichen einen einachsigen Fahrzeuganhänger, auf welchem Solarpanels inkliniert befestigbar und somit aufstellbar sind. Der Anhänger kann wohl Batterien einschliessen und enthält einen DC-AC Konverter, jedoch bietet diese Energieversorgungsstation keine Trinkwasserversorgung.
Die WO 03/008803 A offenbart ein mobiles Wind- und Sonnenenergie-Aggregat, welches die akkumulierte Energie bedarfsweise mittels Elektrolyse in Wasserstoff und Sauerstoff aufspaltet, sodass bei Mangel an Sonne und Wind aus Wasserstoff mittels Brennstoffzellen wieder elektrische Energie verfügbar gemacht werden kann. Dieses Aggregat verfügt auch über einen Heisswasser-Boiler, zur Bereitstellung von Warmwasser. Das Wasser wird von einer Wasserversorgungsleitung bezogen, oder es wird Regenwasser aufgefangen. Allerdings ist dieses Aggregat aufgrund seiner schieren Grösse und Auslegung nicht für den Einsatz in abgelegenen, schwer zugänglichen Gebieten geeignet. Immerhin wird angegeben, es weise idealerweise die Grösse eines 20- bis 40-ft Containers auf. Die Solarpanel-Fläche wird mit 24m² angegeben, der Wassertank mit 2'000 Liter, der Wasserstofftank mit 5'000 Litern bei einem Druck von 25bar. Diese Komponeten sind so gross und schwer, dass ein einfacher Transport in abgelegene unterentwickelte Gebiete kaum möglich ist, und die Bedienung und der Betrieb dieses Aggregates vor Ort anforderungsreich und daher nicht unproblematisch ist.
Die DE 8438377 U zeigt einen zusammenlegbaren Körper, dessen Klappwandungen mit Solarzellen bestückt sind und zur Energieaufnahme in günstige Winelstellungen gebracht werden können. Es handelt sich bei diesem Körper jedoch nicht um eine Universallösung für die Bereitstellung von wahlweise elektrischem Strom aus Sonne und/oder Wind und sauberem Trinkwasser aus einem Gewässer oder aus dem Grundwasser, sondern einzig um eine Lösung für die Bereitstellung von Solarstrom.
Die DE 196 08 330 A schliesslich offenbart eine Sonnen/Wind-Stromerzeugungsanlage, die aus einem vierseitigen Gehäuse mit ausschwenkbaren Solarpanels besteht. Der Aggregatboden ist mit einer Drehvorrichtung mit Stellantrieb verbunden, sodass die Anlage sich automatisch in die wirtschaftlichste Position in Bezug auf Wind und Sonne drehen kann. Diese Stromerzeugungsanlage bietet jedoch keine Trinkwasseraufbereitung und enthält auch keine Module für temporär verschiedenen Bedarf.
In abgelegenen, unterentwickelten Gebieten, namentlich in weiten Teilen Afrikas, Asiens und Südamerikas und weiteren Erdteilen, sowie auch auf vielen kleinen Inselen gibt es kaum eine Infrastruktur, weder Strassen noch Energie- und Wasserversorgung. Das allererste was nötig ist, um den dort lebenden Menschen eine bessere Lebensqualität zu bieten, ist die Verfügbarmachung von sauberem Trinkwasser. Hierzu muss auf Sonnen- und Windenergie zurückgegriffen werden, die meist verfügbar ist, nachhaltig ist und nichts kostet. Eine entsprechende Versorgungseinheit muss daher möglichst kompakt und leicht transportierbar sein, und möglichst einfach bedienbar, und sie muss bedarfsweise Wasser und/oder elektrischen Strom liefern. All diese Anforderungen können von den Anlagen aus dem Stand der Technik nicht befriedigend erfüllt werden.

Gefragt ist deshalb eine Versorgungseinheit für Strom und Wasser, welche geräuscharm bis geräuschlos, zuverlässig, wartungsfrei, geruchsfrei und effizient arbeitet und mit erneuerbaren Energien betrieben wird. Eine solche Versorgungseinheit muss kompakt, leicht und mobil sein, damit sie ohne grosse Probleme zu Land, zu Wasser und zu Luft an jeden beliebigen Einsatzort transportiert werden könnte. Diese Versorgungseinheit muss einfach bedienbar sein und je nach effektivem Bedarf rasch an die lokalen Bedürfnisse anpassbar sein. Sie soll je nachdem den Bedarf an Strom wie auch an Trinkwasser decken können, sofern Umgebungswasser in Form von Grundwasser oder einem stehenden oder fliessenden Gewässer zur Verfügung steht. Hierfür muss sie das Wasser zu Trinkwasserqualität aufbereiten können. Schliesslich muss sie ökonomisch herstellbar sein, sodass sie an Orten, wo sonst kein Strom zur Verfügung steht, von einer Vielzahl der sich dort temporär aufhaltenden oder permanent dort lebenden Menschen einsetzbar ist, weil sie in Anschaffung und Betrieb so kostengünstig ist, dass sie von diesen Menschen auch finanzierbar ist.

Es ist deshalb die Aufgabe der vorliegenden Erfindung, eine Versorgungseinheit für Strom und Wasser auf der Basis erneuerbarer Energien zu schaffen, welche die oben aufgezählten Kriterien erfüllt und namentlich kompakt transportierbar ist, einfach installierbar und bedienbar ist, und den Bedarf an Strom und Wasser einer durchschnittlichen vierköpfigen Familie zu decken vermag, indem sie hierfür täglich eine durchschnittliche elektrische Energiemenge von wenigstens ca. 25kWh als elektrischen Strom zur Verfügung stellen kann und erzeugte Überschussenergie speichern kann, und je nach Bedarf Trinkwasser durch Pumpen und Reinigen von Wasser aus einer Schmutzwasserquelle liefern kann.

Diese Aufgabe wird gelöst von einer Versorgungseinheit für Strom und/oder Wasser auf der Basis von erneuerbaren Energien, mit Solarpanels (6) zur Erzeugung von elektrischem Strom und Akkumulatoren zur Speicherung des erzeugten elektrischen Stroms, welche sich durch die Merkmale des Anspruchs 1 auszeichnet.

In den Zeichnungen ist eine beispielweise Ausführung einer derartigen Versorgungseinheit in verschiedenen Darstellungen gezeigt. Anhand dieser Zeichnungen werden nachfolgend der Aufbau, die einzelnen Bestandteile sowie die Funktion der Versorgungseinheit für Strom und Wasser beschrieben und erklärt.
Es zeigt:
- Figur 1:: Die Versorgungseinheit im Zustand für den Transport;
- Figur 2:: Die Versorgungseinheit im Betriebszustand, mit aufgeklappten Solarpanels und montiertem Windrad;
- Figur 3:: Den unteren kastenförmigen Profilrahmen der Versorgungseinheit mit aufgeklappten Solarpanels, mit dem Scharnier auf der hinteren Bildseite, und teilweiser Weglassung der aufgeklappten Solarpanels;
- Figur 4:: Den unteren kastenförmigen Profilrahmen der Versorgungseinheit mit leicht aufgeschwenktem oberen kastenförmigen Profilrahmen und den daran aufgeklappten Solarpanels, mit dem Scharnier auf der rechten Bildseite, unter Weglassung der aufgeklappten Solarpanels;
- Figur 5:: Einen Blick in das Innere des Moduls für die Wasserbereitstellung mit der elektrischen Wasserpumpe, von der einen Seite her gesehen;
- Figur 6:: Einen Blick in das Innere des Modul für die Wasserbereitstellung, mit der Filtrieranlage von der anderen Seite her gesehen;
- Figur 7:: Das einschiebbare Modul mit dem vom Windrad antreibbaren Generator, dem Trägerstab dafür und dem Windleitwerk, sowie den eingepackten Windradflügeln im Zustand für den Transport;
- Figur 8:: Das einschiebbare Modul mit dem vom Windrad antreibbaren Generator, dem Seitenleitwerk, Trägerstab und den Windradflügeln von der gegenüberliegenden Seite her gesehen;
- Figur 9:: Das einschiebbare Modul mit den Batterien;
- Figur 10:: Die Versorgungseinheit auf einem Rohrring fahrbar zur Verschwenkbarkeit um ihre Hochachse.

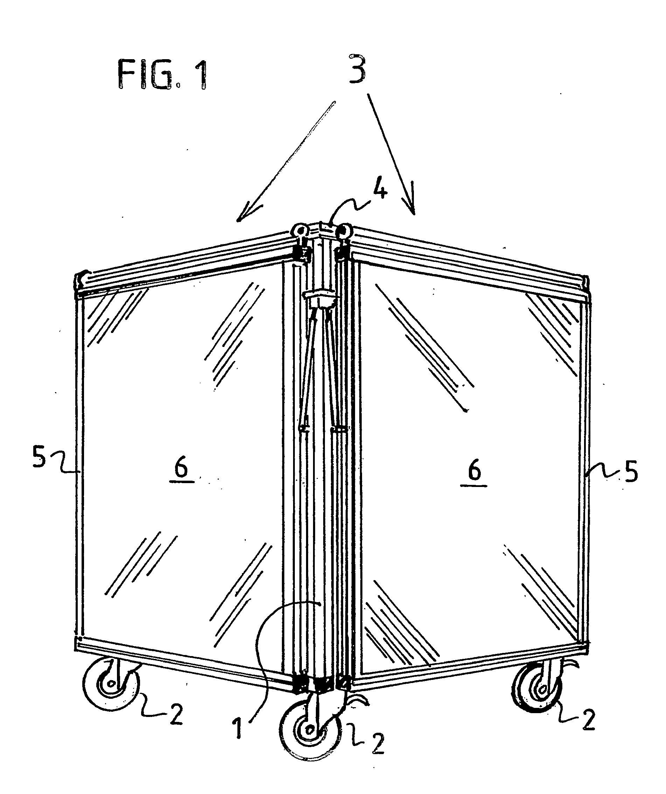

In Figur 1 ist die Versorgungseinheit im Nicht-Betriebszustand gezeigt oder im Zustand für den Transport. Sie wird von einem kastenförmigen Profilrahmen 1 gebildet, der hier aus einem handelsüblichen Aluminiumprofil gebaut ist, welches im Querschnitt quadratisch ist und an jeder Längsseite eine im Profil T-förmige Längsnut mit entsprechenden Hinterschneidungen aufweist. Dieser kastenförmige Profilrahmen 1 weist eine Breite und Länge auf, die identisch sind, während seine Höhe etwas geringer ist, zum Beispiel etwa zwischen 2/3 oder 4/5 der Länge und Breite, wie das anhand einer weiteren Figur noch klar wird. Der kastenförmige Profilrahmen 1 steht auf Rädern 2, im gezeigten Beispiel handelt es sich um vier freigelenkte Räder 2, die an den unteren Ecken des kastenförmigen Rahmens 1 montiert sind. Damit ist die ganze Versorgungseinheit leicht verschiebbar und kann in allen Richtungen gerollt werden, was ein leichtes Auf- und Abladen auf Lkws, Einladen in Container und Verschieben an Ort und Stelle erlaubt. Zwei nebeneinander angeordnete Räder 2 können um ihre vertikale Schwenkachse blockiert werden, sodass sie die gleiche Rollrichtung einnehmen, die sich dann längs einer Rahmenseite erstreckt. Die Versorgungseinheit kann so von mehreren Hilfspersonen oder von einem Fahrzeug mittels Seilen gezogen oder auch geschoben werden und sie kann dann besser gelenkt werden. Auf der Oberseite 3 dieses kastenförmigen Profilrahmens 1 liegt ein zu ihm im Grundriss identischer kastenförmiger Profilrahmen 4, der in seiner quadratischen Oberseite 3 ein Solarpanel enthält, das in dieser Abbildung nicht einsehbar ist. Dieser gesonderte kastenförmige Profilrahmen 4 hat eine Höhe von etwa einem Fünftel bis einem Drittel der Länge und Breite des kastenförmigen Rahmen 1, das heisst eine Höhe von ca. 20cm bis 35cm, und er liegt deckungsgleich auf dem unteren kastenförmigen Profilrahmen 1 auf. Seine eine Unterseite ist mit einer Oberseite des quaderförmigen Profilrahmens 1 schwenkbar zusammengelenkt, sodass der obere Profilrahmen 4 mitsamt dem auf seiner Oberseite von ihm aufgenommenem Solarpanel um diese Achse schwenkbar ist. An den oberen vier Längskanten dieses oberen Profilrahmens 4 ist je ein peripherer quadratischer Profilrahmen 5 schwenkbar angelenkt, wobei jeder dieser Profilrahmen 5 ein Solarpanel 6 aufnimmt. Wenn alle diese peripheren Profilrahmen 5 mit den Solarpanels 6 wie hier gezeigt nach unten geschwenkt sind, so wird ein Kubus gebildet, dessen Breite, Länge und Höhe also gleich sind. Idealerweise weist dieser Kubus eine Seitenlänge von 1 m auf, was sich für den Containertransport, sei es auf einem Lkw, in einem Schiffscontainer oder in einem Flugzeugcontainer als bestes Mass erweist, weil dann der zur Verfügung stehende, international normierte Raum bestmöglich ausgenützt wird. Gleichzeitig ist ein Kubus von dieser Dimension noch ohne weiteres von zwei Personen verschiebbar, ohne dass für jede Verschiebung Hebezeuge und Fahrzeuge nötig sind.

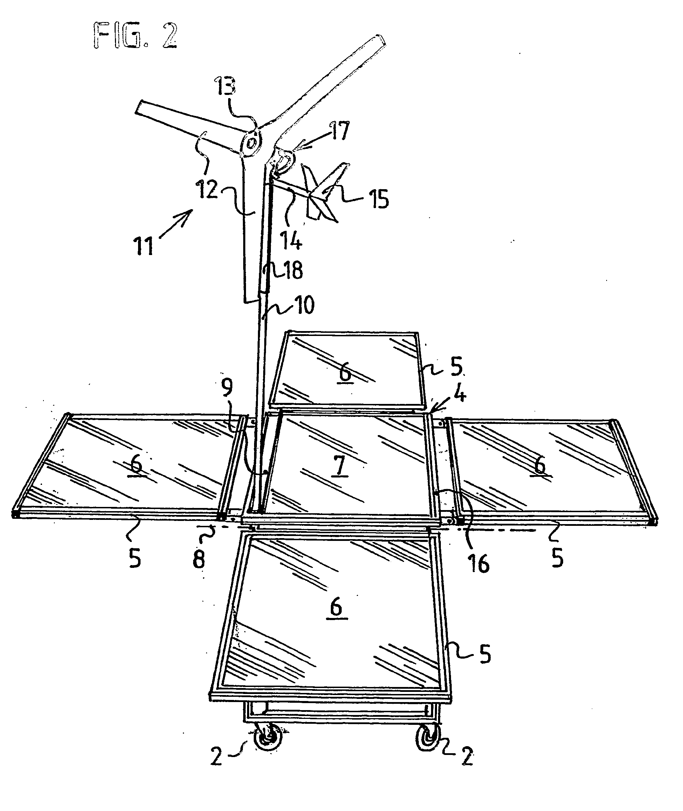

Die Figur 2 zeigt die Versorgungseinheit mit aufgeklappten Solarpanels 6 und aufgeschwenktem zentralen Solarpanel 7, so wie die Versorgungseinheit im Betrieb aussieht. In dieser Darstellung ist nun das zentrale Solarpanel 7 sichtbar, welches vom quadratischen Profilrahmen 16 eingefasst ist, der die Oberseite des oberen kastenförmigen Profilrahmens 4 bildet. Aus der in Figur 1 gezeigten Ausgangslage wurden zunächst die vier an der Oberseite des oberen Profilrahmens 4 angelenkten quadratischen Profilrahmen 5 mit den von ihnen eingefassten Solarpanels 6 nach oben geschwenkt, in die Ebene hinein, in welcher die Oberseite des oberen Profilrahmens 4 mit dem von ihm eingefassten Solarpanels 7 liegt. In dieser Weise wird ein Kreuz von Solarpanels 6,7 gebildet. Der obere Profilrahmen 4 wurde hernach um eine horizontale Achse 8, welche hier strichliniert eingezeichnet ist, nach vorne geneigt beziehungsweise seine hier dem Betrachter abgewandte Seite wurde etwas angehoben, sodass dieser obere Profilrahmen 4 und insbesondere das in seiner Oberseite vom dort gebildeten quadratischen Profilrahmen 16 enthaltene Solarpanel 7 eine Neigung gegenüber der Horizontalen von etwa 30° aufweist. In gleicher Weise nehmen dann auch alle an diesem quadratischen Rahmen 16 angelenkten weiteren Solarpanels 6 automatisch eine ebensolche Neigung auf. Diese Neigung ist von 0° bis etwa 60° variierbar und in jeder Einstellage arretierbar. Die Horizontalachse 8 erstreckt sich längs der oberen Aussenkante des unteren Profilrahmens 1 und der unteren Aussenkante des anliegenden oberen Profilrahmens 4. Wie man hier sieht, füllt das Solarpanel 7 den Rahmen der Oberseite des oberen Profilrahmens 4 auf einer Seite nicht vollständig aus, sodass dort ein Schlitz 9 gebildet ist, der vertikal zur Schwenkachse 8 verläuft. Dieser Schlitz 9 dient zur Aufnahme des Mastens 10 eines Windrades 11. Dieser Mast 10 ist in der Ausgangslage wie in Figur 1 dargestellt vollständig im Innern der dann kubusförmigen Versorgungseinheit untergebracht. Es kann sich hierzu um einen teleskopisch ausziehbaren Mast 10 oder um einen aus mehreren Abschnitten zusammenmontierbaren Mast 10 oder um einen gelenkig aufklappbaren Mast handeln. Der Aufbau des Mastes 10 ist gleichzeitig so gestaltet, dass dieser verschieden hoch eingestellt werden kann, entweder indem das Teleskop in verschiedenen Ausziehlagen arretierbar ist, oder aber der Mast 10 etwa mittels Rohrschellen zu beliebigen Einstellhöhen zusammenbaubar ist oder durch das mechanische Aufklappen seiner Gelenke verschieden hoch ausgefahren werden kann. Bei einem Mast, der aus mehreren gelenkig miteinander verbundenen Mastabschnitten besteht, werden diese Gelenke mittels eines Kurbeltriebes aufgeklappt, wozu an den Gelenken zum Beispiel je ein Schneckenantrieb vorgesehen sein kann, dessen Schnecke über eine Saite von der Kurbel aus angetrieben drehbar ist. Auf der Mastspitze, die in maximal ca. 3m Höhe liegt, ist ein Windrad 11 montiert, das hier aus drei Flügeln 12 besteht, welche mit ihren Flügelwurzeln auf die zentrale Nabe 13 eines zum Windrad 11 gehörigen Generators 17 aufschraubbar sind. Die Flügel 12 des Windrades 11 weisen eine Länge auf, die etwas geringer ist als 1 m, sodass sie für Transportzwecke der Länge nach im Innern des Kubus wie in Figur 1 gezeigt verstaubar sind. Der Generator 17 ist auf das obere Ende eines über den Mast 10 stülpbaren Rohrabschnittes 18 von ca. 0.60m bis 0.80m Länge montiert, wobei er um die Rohrachse drehbar montiert ist. Seine Antriebachse verläuft etwa im rechten Winkel zu diesem Rohrabschnitt 18. Auf der hinteren Seite des Generators 17 erstreckt sich ein Trägerstab 14 um etwa einen halben Meter nach hinten. An dessen Ende ist ein Windleitelement 15 montiert. Dieses ist so kompakt gebaut, dass es für die Zwecke des Transportes im Innern des Kubus untergebracht werden kann, so wie er sich in Figur 1 präsentiert.

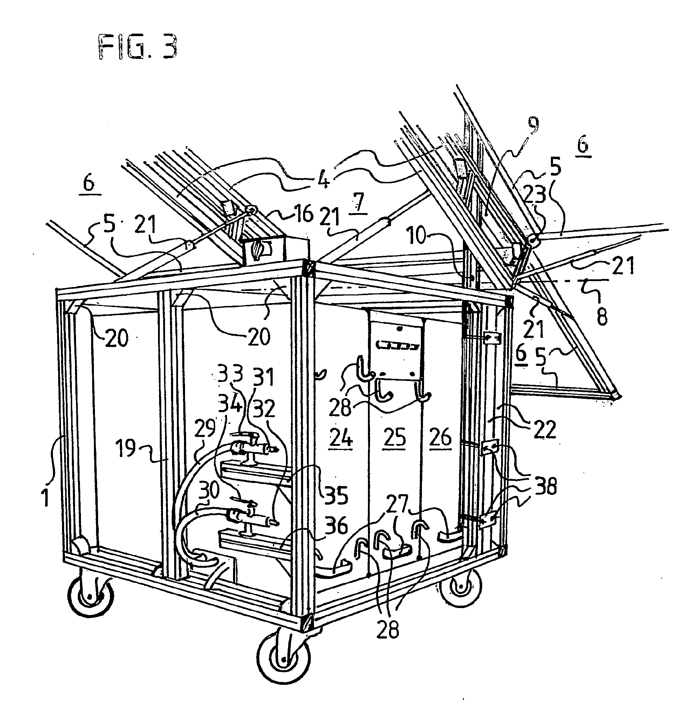

In Figur 3 sieht man die Versorgungseinheit bei aufgeklappten bzw. aufgeschwenkten Solarpanels von der hinteren Seite her. Man erkennt daher den kastenförmigen Profilrahmen 1 aus den Aluminium- oder Edelstahlprofilen mit auf jeder Längsseite einer eingelassenen T-Nut. Dieser kastenförmige Profilrahmen 1 hat eine identische Länge und Breite, während seine Höhe im gezeigten Beispiel etwa 4/5 dieses Masses entspricht. Zur Verstärkung ist er auf der Seite der horizontalen Schwenkachse 8 für den oberen kastenförmigen Rahmen 4 sowie auf der gegenüberliegenden Seite in der Mitte mit einem vertikalen Mittelpfosten 19 versehen. Sämtliche Ecken der Profilrahmen 1 und 4 sind aufgrund des Profilsystems mit T-Nuten durch Verschraubung der Profile erstellt. Es sind also keine Schweissarbeiten nötig, um die Rahmen 1,4 zu montieren. Die Verwindungsstabilität der kastenförmigen Rahmen 1,4 wird durch Eckverstrebungen 20 erzielt, die sich ebenfalls mit den Profilen verschrauben lassen. Man erkennt in dieser Darstellung, dass der auf diesem kastenförmigen Profilrahmen 1 nach oben geschwenkte Teil seinerseits einen kastenförmigen Profilrahmen 4 bildet, wobei die vier Profile, welche dessen Oberseite bilden, einen quadratischen Profilrahmen 16 bilden, welcher das zentrale Solarpanel 7 einrahmt und einfasst. Längs des hier hinteren oberen Horizontalprofils des kastenförmigen Profilrahmens 1 erstreckt sich die Horizontalachse 8, um welche der obere Profilrahmen 4 nach oben schwenkbar ist. Damit dieses Hochschwenken erleichtert wird, sind zwischen dem unteren kastenförmigen Rahmen 1 und dem oberen kastenförmigen Profilrahmen 4 zwei Gasfedern 21 eingebaut. Diese sind einerseits an den senkrecht zur Horizontalachse verlaufenden Profilen angelenkt, und zwar auf derjenigen Seite, die dem von der Horizontalachse 8 gebildeten Scharnier abgewandt ist, und von dort aus führen sie nach schräg oben an die oberen Profile 16 des oberen kastenförmigen Profilrahmens 4, wo sie näher zum Scharnier angelenkt sind. Diese Gasfedern 21 entwickeln eine solche Kraft, dass das Aufschwenken des oberen kastenförmigen Profilrahmens 4 mitsamt den daran angelenkten peripheren Solarpanels 6 leicht vonstatten geht. In ähnlicher Weise wie die Gasfedern 21 können Einstellstützen an die Rahmen 1,4 angelenkt sein, wobei deren eines Ende je einen Längsschlitz aufweist, durch den eine Schraube führt, um welche die Stütze schwenk- und verschiebbar ist. Durch Festziehen der Schraube kann die Stütze in jeder beliebigen Einstelllage starr gemacht und in ihrer Länge arretiert werden, sodass also jede gewünschte Schwenklage des oberen kastenförmigen Profils 4 arretierbar ist. In der im Bild hinteren rechten Ecke des kastenförmigen Profilrahmens 1 erkennt man den Mast 10. Dieser erstreckt sich längs zweier eigens für die Maststabilisierung angeordneter Montageprofile 22, die vertikal verlaufend mit wenig Abstand voneinander in den kastenförmigen Profilrahmen 1 eingebaut sind. Auf ihrer der Kasteninnenseite zugewandten Seite verläuft ein kännelartiges Profil, an welchem der Mast 10 anliegt. Mittels dreier U-förmiger Spannstäbe 50, deren Enden durch die Montageprofile 22 verlaufen, wird der Mast 10 gegen das kännelartige Profil gezogen, indem die U-förmigen Spannstäbe 50 mittels Schrauben 38 gegen die Montageprofile 22 gezogen werden. Oben erstreckt sich der Mast 10 durch einen Schlitz 9, der zwischen dem Solarpanel 7 und dem dortigen Profil 16 verläuft, indem das Solarpanel 7 den quadratischen Profilrahmen 16 auf dieser Seite nicht vollständig ausfüllt. Durch diesen Schlitz kann der Mast nach oben je nach Ausführung entweder teleskopisch ausgefahren, zusammengesteckt oder über einen Kurbeltrieb aufgeklappt werden. Die peripheren quadratischen Profilrahmen 5 sind an mindestens zwei Scharnieren 23 angelenkt, die ihrerseits an den oberen Profilen 16 des quadratischen Profilrahmens 4 für das zentrale Solarpanel 7 angebaut sind. Damit das Aufschwenken dieser peripheren quadratischen Profilrahmen 5 mitsamt den von ihnen eingefassten Solarpanels 6 leichter vonstatten geht, sind diese quadratischen Profilrahmen 5 mit Gasfedern 21 an den unteren Ecken des oberen kastenförmigen Profilrahmens 4 abgestützt. Die peripheren quadratischen Profilrahmen 5 mit den Solarpanels 6 werden in die Ebene des Solarpanels 7 aufgeschwenkt und in dieser Schwenklage mit Sicherungsstiften, Stützen oder Streben gesichert.

Im Innern des unteren kastenförmigen Rahmens 1 erkennt man drei kastenartige Module 24,25,26, welche nebeneinander raumfüllend im Rahmen angeordnet sind. Diese Module 24-26 bestehen in ihrem Innern aus einem Profilrahmen und sind aussen mit Platten verschlossen. Im gezeigten Beispiel bestehen diese Platten aus Kunststoff, wobei der so gebildete Kasten oben offen und mit einem zusätzlichen Deckel verschliessbar ist. Der Boden der Kasten ist perforiert, damit allfällig eindringendes Wasser oder Kondenswasser abfliessen kann. Die Profilrahmen der Module 24-26 können selbstverständlich auch mit Blechplatten verschlossen werden, jedoch eignet sich Kunststoff besser, weil er korrosionsfest und säurebeständig ist. Jedes kastenartige Modul 24-26 ist an beiden Stirnseiten mit einem Griff 27 ausgerüstet, an welchem es aus dem Innern des kastenförmigen Profilrahmens 1 wie eine Schublade herausziehbar ist. Hierzu liegt jedes Modul 24-26 auf ein oder mehreren Einschubschienen auf. In der hier gezeigten, ganz eingeschobenen Lage können die Module 24-26 gesichert werden. Auf ihren Frontseiten, die hier sichtbar sind, wie auch auf den hier nicht sichtbaren Rückseiten sind die Module 24-26 ausserdem mit Haken 28 ausgerüstet. Diese ermöglichen es, Seile oder Gurten von Hebezeugen anzubringen, damit ein einzelnes Modul, nachdem es auf den Einschubschienen aus dem Rahmen 1 herausgezogen wurde, mittels eines Kranes erfasst und verschoben werden kann. Diese Module 24-26 enthalten verschiedene Komponenten für den Betrieb der Versorgungseinheit, wobei diese Komponenten jedoch in der hier gezeigten Darstellung nicht sichtbar sind. Vorne, auf der dem Betrachter zugewandten Seite, erkennt man zwei Schläuche 29,30 mit Kupplungen 31,32, die je mit einem Absperrhahn 33,34 ausgerüstet sind. Diese Kupplungen 31,32 sind an Profilabschnitten 35,36 angebaut, die an einem vertikalen Profil des kastenförmigen Profilrahmens 1 angeschraubt sind. Die zugehörigen Schläuche 29,30 führen in das Innere des Moduls 24, in welchem die Einrichtungen zur Aufbereitung von Wasser untergebracht sind, wie das anhand weiterer Bilder noch erklärt wird. Im mittleren Modul 25 befinden sich gut geschützt die Batterien und die Elektronik zur Steuerung der ganzen Versorgungseinheit. Mittels der Solarpanel 6,7 wird ja Sonnenlicht photovoltaisch in elektrischen Gleichstrom umgewandelt und in die Batterien eingespeichert. Der Gleichstrom wird dann zum Verbrauch mittels eines Wechselrichters in 110V oder 220-V-Wechselstrom transformiert. Daneben kann auch mit dem Windrad elektrischer Wechselstrom erzeugt werden, der nach Gleichrichtung ebenfalls in die Batterien eingespeist wird. Tagsüber, wenn die Sonne scheint, überwiegt der Solarstrom. Nachts jedoch, wenn das Sonnenlicht entfällt, wird der elektrische Strom ausschliesslich vom Windrad generiert, wenn denn Wind zur Verfügung steht. Tagsüber können sich die Solarpanels und das Windrad ergänzen, je nach Wetterlage, das heisst je nach Sonneneinstrahlung und Windverhältnissen. Die erzeugbare Energie ist deshalb über einen 24-Stunden Tag Schwankungen unterworfen, einerseits wegen dem Wechsel von Tag und Nacht und andrerseits wegen des ändernden Wetters, das einen Einfluss auf die Sonnenlicht-Einstrahlung und den Wind hat. Es muss daher dieser unregelmässige Anfall an erzeugbarer elektrischer Energie über die Zeit ausgeglichen werden. Auf der anderen Seite ist es der Energiebedarf, welcher über den 24-Stunden Tag unterschiedlich ist. In der Nacht wird der Energiebedarf geringer sein, und tagsüber hängt er von den momentanen Aktivitäten der Bewohner oder Benützer der Versorgungseinheit ab. All diese Schwankungen werden von den Batterien aufgefangen, die hierzu als Energiespeicher wirken. Sie werden ständig aufgeladen von der unterschiedlichen Menge elektrischer Energie, die gerade von den Solarpanels und dem Windrad kumuliert erzeugbar ist, und sie liefern die jeweils gerade benötigte Energiemenge in einer gewissen Bandbreite von Energie pro Zeit. Diese ist jedoch so ausgelegt, dass die Batterien im Normalfall eines Haushaltbetriebes nie vollständig entladen werden.

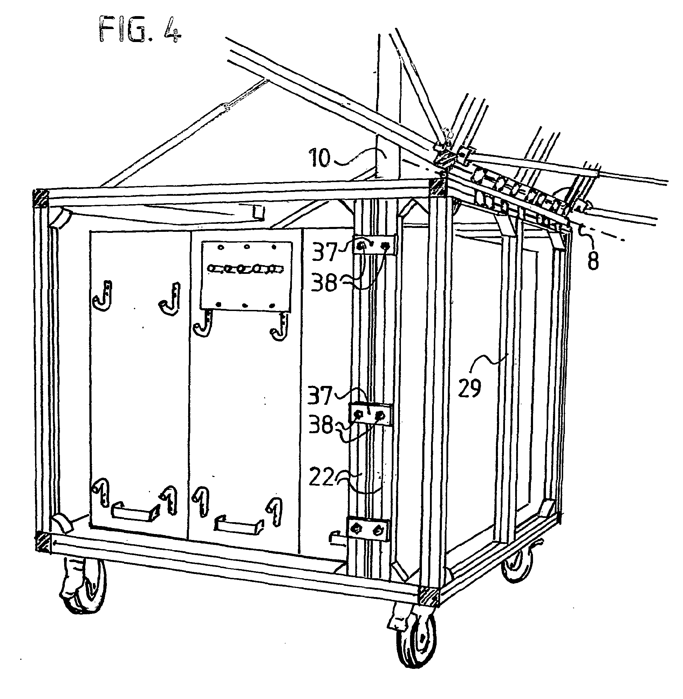

Die Figur 4 zeigt die Versorgungseinheit bei aufgeklappten Solarpanels, mit dem Scharnier nun auf der rechten Bildseite. Man erkennt hier sehr schön dieses Scharnier 8 bzw. die horizontale Achse 8, um welche der obere kastenförmige Profilrahmen 4 gegenüber dem unteren kastenförmigen Profilrahmen 1 nach oben schwenkbar ist. Weiter erkennt man den auf dieser Seite der Versorgungseinheit ebenfalls eingebauten Mittelpfosten 29 und die beiden vertikalen Profile 22, die mit wenig Abstand voneinander auf ihrer Hinterseite den Mast 10 halten, welcher an einem kännelförmigen Profil anliegt, das an diesen beiden vertikalen Profilen 22 befestigt ist. Der Mast 10 wird hierzu mittels U-förmiger Spannstäbe, deren mit Gewinden versehene Enden durch die Profile 22 und die hier gezeigten Flachstählen 37 geführt sind, mit den Muttern 38 verspannt. Im Falle eines gelenkig aufklappbaren Mastes besteht dieser aus mehreren Abschnitten, die miteinander über je eine Gelenkscharnier verbunden sind, sodass die Abschnitte um 180° zusammengeklappt werden können. Im zusammengeklappten Zustand liegen die Abschnitte dann übereinander angeordnet seitlich auf dem Boden des Profilkastens 1. Die Gelenkscharniere sind über je einen Schneckenantrieb aufschwenkbar und in jeder Schwenklage gesichert. Die Schnecken können über je eine Saite angetrieben werden, die ihrerseits von je einer Kurbel betätigt werden.

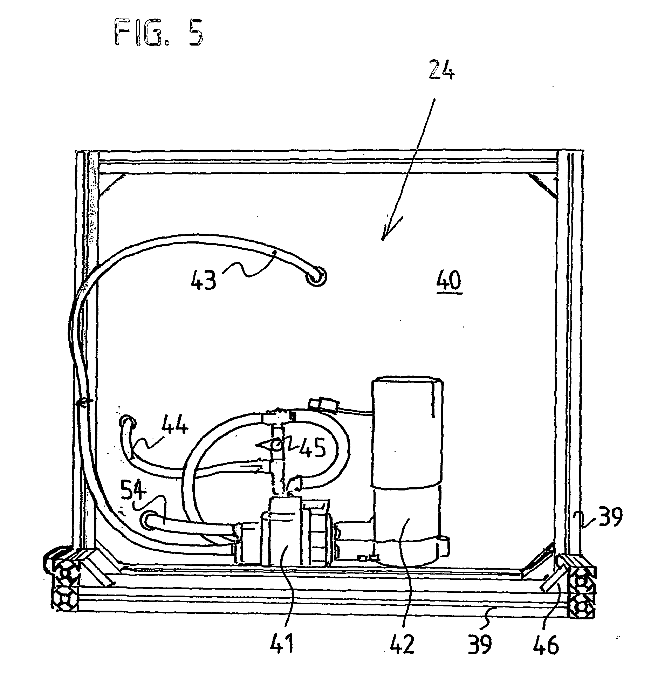

Die Figur 5 zeigt einen Blick in das Innere des Moduls 24 mit der elektrischen Wasserpumpe 41 von der Seite her gesehen. Zum besseren Verständnis ist hier das kastenartige Modul 24 auf einer Seite geöffnet. Man sieht auf eine zentrale Innenwand 40 im Modul 24, die das Modul in zwei Hälften unterteilt. Jedes kastenartige Modul besteht in dieser Weise aus einem Profilrahmen aus den gleichen Aluminium- oder Edelstahlprofilen 39 wie die kastenförmigen Profilrahmen 1 und 4, welche längs jeder Seite eine T-Nut aufweisen. An der Wand 40 ist die Pumpe 41 angebaut, und daneben erkennt man den Elektromotor 42 mit Stromkabel 43 zum Antrieb der Pumpe 41. Diese Pumpe 42 erzeugt einen Druck von 820psi und saugt über den Schlauch 54 Wasser über einen auf der Rückseite der Wand 40 angebauten VorfilterEinrichtung aus einer nahegelegenen Wasserquelle an, zum Beispiel aus einem Brunnen, einem Bach oder aus einem stehenden Gewässer. Sie fördert dann das Wasser auf dem hohen Druck von 820psi über den Hochdruckschlauch zu einer weiteren, ebenfalls auf der Rückseite der Wand 40 angebauten Filtriereinrichtung. Von dieser kommt der Hochdruckschlauch 44 wieder zurück zur Pumpe 41, sodass ein Kreislauf gebildet wird, in welchem stets dieser hohe Druck von 820psi aufrechterhalten wird. Das Ventil 45 dient zum Entleeren des gesamten Systems.

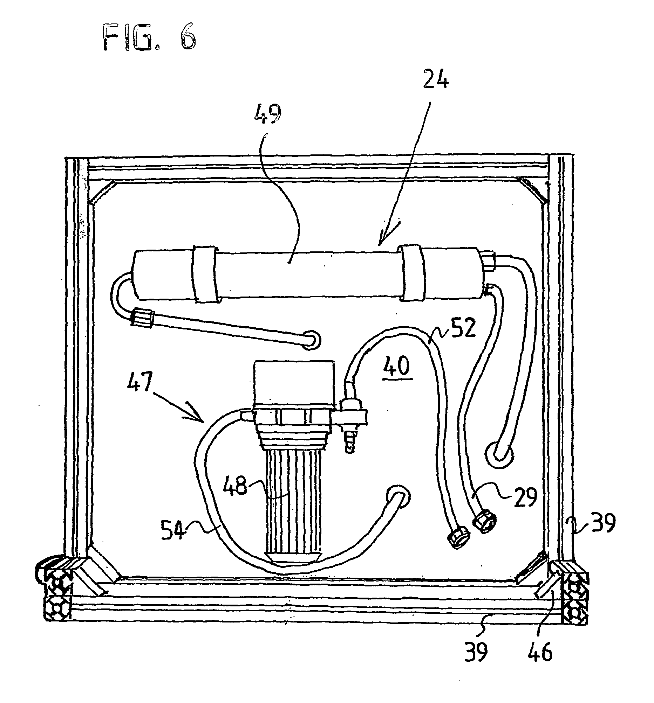

Die Figur 6 gibt den Blick von der anderen Seite des kastenförmigen Moduls 24 her gesehen frei, auf die Rückseite der Zwischenwand 40. Hier ist die Vorfiltereinrichtung 47 mit einer Filterpatrone 48 aus Papier oder einem textilen Flies-Stoff angebaut, und weiter darüber eine handelsübliche Mikrofiltriereinrichtung 49. Diese enthält eine Keramikmembran mit einer Porengrösse von 0.2m⁻⁶. Das von der Pumpe 41 angesaugte Wasser gelangt über den Schlauch 54 zunächst durch den Vorfilter 47 und hernach über den Schlauch 52 weiter in die Pumpe 41, die in Figur 5 gezeigt ist. Von der Pumpe 41 aus wird es auf dem hohen Druck von 820psi über den Hochdruckschlauch zum Keramikfilter 49 gefördert. Nach dem Keramikfilter 49 gelangt ein Teil des Wassers durch den Hochdruckschlauch zurück zur Pumpe 41, sodass ein Hochdruckkreislauf gebildet wird, in welchem dieser Druck von 820psi aufrechterhalten wird. Der andere Teil des Wassers wird über den Schlauch 29 zu einem Anschluss-Stutzen geleitet, ab welchem das Brauchwasser bezogen werden kann.

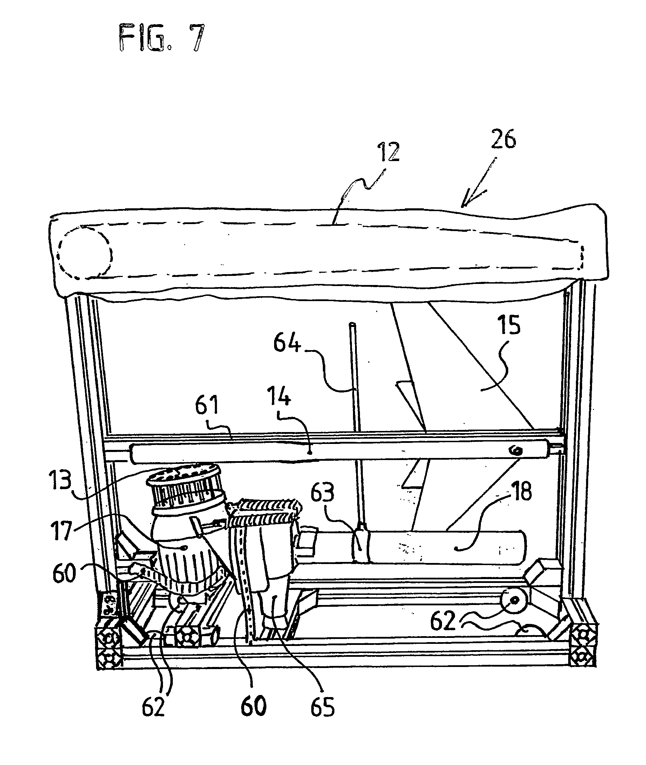

Die Figur 7 gibt Einblick in das Innere des kastenartigen Moduls 26. Dieses enthält im Nicht-Betriebszustand den Generator 17 mit seiner Antriebsnabe 13 und dem Rohrabschnitt 18 sowie einem Sockel 65 für die Aufnahme des Trägerstabes 14 für das Windleitwerk 15. Diese Elemente bilden eine Baueinheit, die in einer eigenen Halterung sitzt, in welcher sie mittels Metallbändern 60 festgespannt und gegen ein Verrutschen gesichert ist. Der Rohrabschnitt 18 ist mit einer Rohrschelle 63 und einem Stab 64 mit einem Verstärkungsprofil 61 verbunden, an dem der Trägerstab 14 für das Windleitwerk 15 festgeschraubt ist. Auf der anderen Seite des Verstärkungsprofils 61 ist das Windleitwerk 15 festgeschraubt. An der Oberseite des Moduls sind die Windradflügel 12 untergebracht, die hier verpackt sind und daher selbst nicht sichtbar sind. Man erkennt ausserdem, dass die unteren Profile des Moduls mit Rollen 62 ausgerüstet sind, was das Verschieben des Moduls im Innern des kastenförmigen Profilrahmens 1 wesentlich erleichtert.

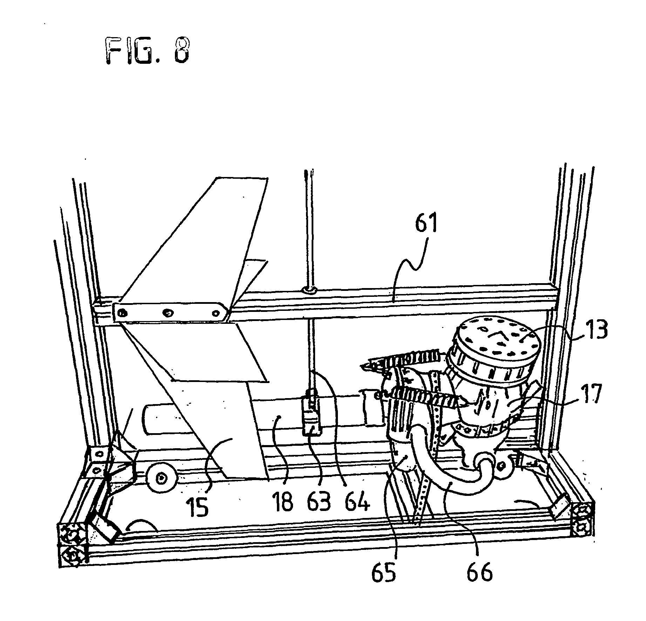

In Figur 8 sieht man dasselbe wie in Figur 7 von der anderen Seite her gesehen. Das Windleitwerk 15 ist mittels einer Schraube am Verstärkungsprofil 61 befestigt und besteht aus vier sternförmig abstehenden Flügeln. In montiertem Zustand sorgen diese Flügel für die Ausrichtung des Windrades gegen den Wind sowie für eine gute Stabilisierung des Windrades in der allgemeinen Luftströmung. Man erkennt auch das Elektrokabel 66, welches vom Generator 17 zum Sockel 65 führt, von welchem auf der hier unteren Seite über eine nicht sichtbare Steckdose der elektrische Strom abnehmbar ist.

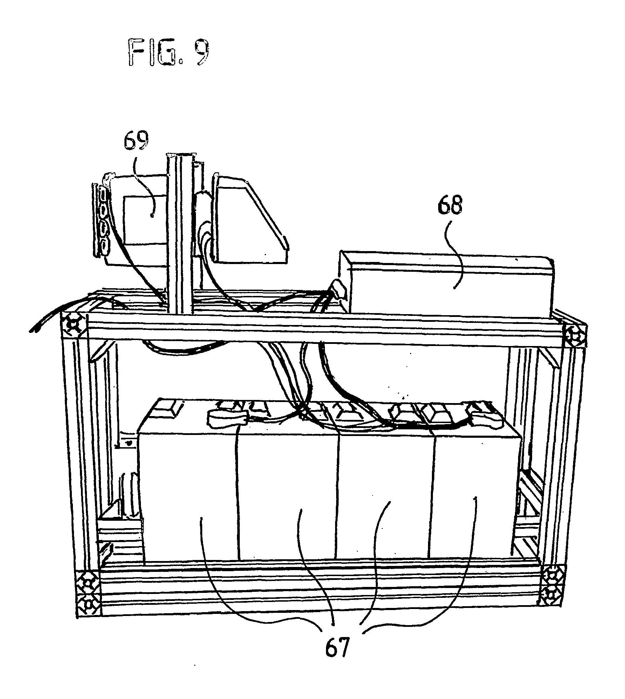

Die Figur 9 zeigt das kastenförmige Modul 25 mit den Batterien 67. Es handelt sich hier um vier Blei-Batterien. Diese dienen zur Pufferung der erzeugten Energie, um die Erzeugungsspitzen wie auch den schwankenden Verbrauch auszugleichen. Der Profilrahmen dieses mittleren Moduls 25 ist etwas weniger hoch gestaltet und oben auf dem Rahmen ist dann die Wechselrichter/Gleichrichtereinheit 68 aufgebaut, welche zur Umwandlung des Gleichstromes aus der Batterie in Wechselstrom der Spannung 110 oder 220V dient, sowie zur Gleichrichtung des Generatorstromes zur Einspeicherung in die Batterien. Ausserdem ist in diesem Modul 25 die elektronische Steuerung 69 der ganzen Versorgungseinheit untergebracht, welche das ganze Energie-Management zwischen Solarpanels, Generator, Batterien und Elektropumpe übernimmt. Bei allen wesentlichen Anlagekomponenten, das heisst bei den Solarpanels, den Batterien, dem Wechsel/Gleichrichter sowie auch bei der Pumpe, der Filter- und Umkehrosmoseeinrichtung sowie beim Windradgenerator handelt es sich um bewährte, handelsübliche Komponenten.

In einer Alternativvariante kann vollständig auf den Einsatz von Batterien verzichtet werden und die Energiespeicherung der solar und durch Windkraft erzeugten elektrischen Energie über Wasserstoff erfolgen. Hierzu wird in demjenigen Modul, das sonst die Batterien trägt, ein Wasserstofferzeuger eingebaut, welcher durch Elektrolyse von Wasser mittels des erzeugten Gleichstroms Wasserstoff und Sauerstoff erzeugt, der dann mittels einer ebenfalls eingebauten Brennstoffzelle wieder verbrannt werden kann.

Das Besondere an der hier vorgestellten Zusammenkopplung und Integration dieser Komponenten ist darin zu sehen, dass die damit erstellte Versorgungseinheit äusserst kompakt ist, Wind und Solarenergie in idealerweise ergänzt, speichert und für den Durchschnittsverbrauch eines mindestens vierköpfigen Haushaltes bereitstellt, und dass dank der modulartigen Unterbringung der einzelnen Komponenten die Einheit rasch an besondere Bedürfnisse anpassbar ist. Die einzelnen Module 24,25,26 wirken als Schnittstellen, sodass Versorgungseinheit bedarfsweise eine Auswahl aus folgenden Möglichkeiten bietet:
- Akkumulation von elektrischer Energie aus Sonnenlicht, und/oder
- Akkumulation von elektrischer Energie aus einem separaten Windgenerator, und/oder
- Pumpen von Wasser aus stehenden, fliessenden Gewässern oder Grundwasser
- Trinkwasseraufbereitung durch Reinigung von zugeführtem Schmutzwasser und/oder
- Abgabe von elektrischem Strom für verschiedenste Verbraucher
- Gleichstrom-Wasserstofferzeugung mittels Brennstoffzellen.
So ist es zum Beispiel möglich, dass die gesamte Wasserversorgungs-Einheit, das heisst also das Modul 24 mitsamt seinen Komponenten, durch einen weiteren Kasten mit Batterien ausgetauscht wird, wenn etwa kein Wasser bereitgestellt werden soll, sondern umso mehr elektrische Energie. Die Wasserversorgungseinheit im Modul 24 kann auch durch einen weiteren Kasten 26 mit Windrad und Generator ersetzt werden, sodass man also zwei Windräder einsetzt, wenn die Versorgungseinheit an einem Ort mit besonders regelmässigen und starken Winden aufgestellt wird und man nicht Wasser bereitstellen muss. Entsprechend höher fällt die Kapazität für die elektrische Stromerzeugung aus. Die Versorgungseinheit kann auch durch weitere Komponenten verstärkt werden, etwa durch den Einsatz eines Mikro-Hydrogenerators, das heisst einer kleinen Turbine mit Generator, die in ein Fliessgewässer gestellt wird und weitere ca. 500 W beisteuern kann. Doch schon mit der Standardausführung, das heisst mit den fünf je rund einen Quadradmeter messenden Solarpanels, die zusammen ca. 650 W Leistung erbringen, sowie mit dem Windrad von einem Durchmesser von fast zwei Metern, das bis zu ca. 750 W Leistung erbringt, lassen sich im Durchschnitt täglich etwa 25 kWh elektrische Energie erzeugen. Bei einer typischen Nutzung sowohl als elektrischer Stromerzeuger wie auch als Wasserversorgungseinheit beträgt die Kapazität dann ca. 17.5 kWh elektrische Energie pro 24 Stundenzyklus zur freien Nutzung und gleichzeitig die Bereitstellung von ca. 500 Liter Trinkwasser in diesem 24 Stundenzyklus.

Andrerseits kann an Orten mit starker und regelmässiger Sonneneinstrahlung, jedoch mit wenig Wind, und wo das Wasser eine grössere Rolle spielt, das Modul für die Windenergie mit einem Wasseraufbereitungsmodul ersetzt werden, sodass mit der vollen Solarpanelkapazität in erster Linie Trinkwasser verfügbar gemacht wird, und entsprechend weniger elektrische Energie für andere Zwecke, weil das in solchen Regionen weniger von Bedeutung ist. Diese Versorgungseinheit kann deshalb rasch an spezifische Bedürfnisse angepasst werden. Es können kurzfristig Module bzw. Kasten mit den entsprechenden Komponenten ausgetauscht und sofort angeschlossen und in Betrieb genommen werden.

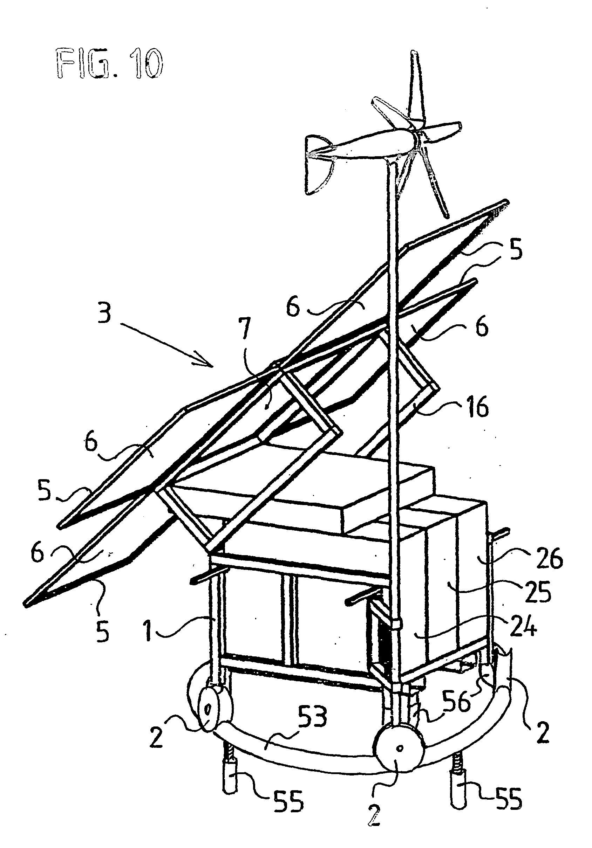

In einer besonderen Ausführung kann die gesamte Versorgungseinheit auf eine motorisch antreibbare, ebene Drehscheibe gestellt werden, und anstelle von Gasfedern kann das zentrale Solarpanel mittels hydraulischen Kolben-Zylindereinheiten in seiner Schwenklage verändert und gehalten werden. Unter Einsatz eines GPS-Systems und geeigneter Software für die Steuerung der Hydropumpen, die sowohl die Drehscheibe drehen wie auch die Kolben-zylindereinheiten betätigen, lässt sich dann für jede Stelle auf der Erde die optimale Nachführung der Versorgungseinheit an die jeweils herrschenden Einstrahlungsverhältnisse der Sonne einstellen. Die Solarpanels werden dann stets gegen die Sonne gedreht und mit der idealen Inklination gegen das eintreffende Sonnenlicht gehalten. In Figur 10 ist ein Beispiel gezeigt, wie die Versorgungseinzeit dem Sonnenstand nachgeführt werden kann. Sie schliesst hierzu einen horizontalen Rohrring 53 ein, welcher auf mindestens drei höhenverstellbaren Stützen 55 steht. Damit ist sie auf einem Untergrund horizontal ausnievellierbar ist oder in einem Fundament in horizontaler Lage verankerbar. Der Durchmesser des Rohrrings 53 entspricht der Diagonalen zwischen je zwei der vier Rädern 2 an der Einrichtung. Die Räder 2 weisen eine U-förmige Lauffläche auf, sodass sie, wenn sie auf den Rohrring 53 gestellt sind, an diesem zuverlässig geführt sind, sodass die Versorgungseinheit auf dem Rohrring 53 um ihre Hochachse schwenkbar oder drehbar ist. Mindestens eines der Räder 2 oder besser zwei einander gegenüberliegenden Räder sind mittels eines Elektromotors 56 antreibbar. Die elektronische Steuerungseinheit 69 ist speicherprogrammierbar, sodass die Versorgungseinheit mittels des Radantriebes abhängig von Kalenderdatum und Tageszeit dem Sonnenstand nachführbar ist.

Diese Versorgungseinheit ist äusserst leise im Betrieb, darüber hinaus arbeitet sie wartungs- und emissionsfrei. Mit ihrem ungefähren Gewicht von 300 kg und ihren kompakten Ausmassen eines Kubus von 1 m Seitenläge kann sie ohne grossen Aufwand an jeden beliebigen Ort transportiert und dort aufgestellt und sofort in Betrieb genommen werden. In Gebieten mit starken Winden empfiehlt es sich, die Versorgungseinheit bei aufgeklappten Solarpanels allseits kräftig zu verzurren.

## Patentansprüche

1. Versorgungseinheit für Strom und/oder Wasser auf der Basis von erneuerbaren Energien, mit Solarpanels (6) zur Erzeugung von elektrischem Strom und Akkumulatoren zur Speicherung des erzeugten elektrischen Stroms, ***dadurch gekennzeichnet,* dass** sie einen unteren kastenförmigen Profilrahmen (1) einschliesst, über dem ein weiterer, oberer Profilrahmen (16) mit gleicher Grundfläche ruht, dessen Profile oben ein Viereck bilden, welche ein Solarpanel (7) einfasst, und welcher obere Profilrahmen (16) um eine mit dem unteren Profilrahmen (1) gemeinsame Horizontalachse nach oben schwenkbar ist, wobei an den vier oberen Profilen des oberen Profilrahmens (16) je ein weitere Profilrahmen (5) mit einem von ihm umfassten Solarpanel (6) angelenkt ist, sodass diese Solarpanels (6) von einer Transportlage, in welcher sie seitlich am kastenförmigen Profilrahmen (16) anliegen und die Seitenfläche eines Kubus bilden, in die Ebene seiner Oberseite aufschwenkbar sind und mit dem Solarpanel (7) eine kreuzförmige Solarpanelanordnung bilden, welche um die gemeinsame Horizontalachse am Profilrahmen (1) um bis zu 60° neigbar und in jeder Lage arretierbar ist, und dass im Innern des kastenförmigen Profilrahmens (1) als Schnittstellen wirkende Module (24,25,26) einschiebbar eingebaut sind, die einen schubladenartigen, seitlich mit Platten eingefassten Profilrahmen mit perforiertem Boden aufweisen, wovon ein Modul (25) eine Batterie und eine Elektronik zur Steuerung der ganzen Versorgungseinheit enthält, sowie einen Wechselrichter zur Transformation des akkumulierten Gleichstroms in 110V oder 220-V-Wechselstrom, und ein weiteres Modul (24) eine elektrische Wasserpumpe (41) mit ihrem Elektromotor (42) enthält, zum Pumpen von Wasser aus einer Wasserquelle und Fördern des Wassers auf mindestens 820psi durch eine zweistufige Filtriereinrichtung aus Papier- oder Textilfilter und anschliessendem Keramikfilter, sodass die Versorgungseinheit wahlweise mindestens folgende Betriebsmodi bietet:
• Erzeugen elektrischer Energie aus Sonnenlicht, und Speichern oder Abgeben derselben als Wechselstrom, oder
• Erzeugen elektrischer Energie aus Sonnenlicht und Pumpen von Wasser aus stehenden, fliessenden Gewässern oder Grundwasser und Aufbereiten desselben durch Filtrierung.

2. Versorgungseinheit für Strom und/oder Wasser auf der Basis von erneuerbaren Energien nach Anspruch 1, ***dadurch gekennzeichnet,* dass** der kastenförmige Profilrahmen (1) ein Modul (26) aufweist, welches einen teleskopisch ausziehbaren oder einen aus mehreren Abschnitten zusammenbaubaren oder aufklappbaren vertikalen Mast (10) enthält, auf den ein ebenfalls in diesem Modul (26) lagerbares Windrad (11) mit Flügeln (12), Generator (17) und Windleitelementen (15) montierbar ist, zur zusätzlichen Erzeugung und Einspeisung von aus Wind erzeugtem elektrischen Strom.

3. Versorgungseinheit für Strom und Wasser auf der Basis von erneuerbaren Energien nach einem der vorangehenden Ansprüche, ***dadurch gekennzeichnet,* dass** der Profilrahmen (1) mit Rädern (2) ausgerüstet ist, von denen mindestens zwei frei gelenkt sind.

4. Versorgungseinheit für Strom und Wasser auf der Basis von erneuerbaren Energien nach einem der vorangehenden Ansprüche, ***dadurch gekennzeichnet,* dass** die kastenartigen Module (24-26) im Innern des Profilrahmens (1) schubladenartig und passgenau in diesen Profilrahmen (1) einschiebbar sind und darin sicherbar sind.

5. Versorgungseinheit für Strom und Wasser auf der Basis von erneuerbaren Energien nach einem der vorangehenden Ansprüche, ***dadurch gekennzeichnet,* dass** die Filtriereinrichtung (47) für das geförderte Wasser zusätzlich eine UV-Behandlungsanlage oder eine Umkehrosmose-Einrichtung (49) einschliesst, zur Aufbereitung des geförderte Wassers zu Trinkwasser.

6. Versorgungseinheit für Strom und Wasser auf der Basis von erneuerbaren Energien nach einem der vorangehenden Ansprüche, ***dadurch gekennzeichnet,* dass** der obere, um die Horizontalachse (8) schwenkbare kastenförmige Profilrahmen (4) mittels zweier Gasfedern (21) gegenüber dem unteren kastenförmigen Profilrahmen (1) abgestützt ist, wobei zwischen dem oberen, um die Horizontalachse (8) schwenkbaren kastenförmigen Profilrahmen (4) und unteren kastenförmigen Profilrahmen (1) Einstellstützen angeordnet sind, mittels derer die Schwenklage des oberen Profilrahmens (4) in jeder Schwenklage arretierbar ist, und die Profilrahmen (5) für die Solarpanels (6) je mit zwei Gasfedern (24) an den unteren Ecken des oberen Profilrahmens (4) abgestützt sind.

7. Versorgungseinheit für Strom und Wasser auf der Basis von erneuerbaren Energien nach einem der Ansprüche 3 bis 6, ***dadurch gekennzeichnet,* dass** sie einen zugehörigen horizontalen Rohrring (53) einschliesst, welcher auf mindestens drei höhenverstellbaren Stützen (55) steht und auf einem Untergrund horizontal ausnivellierbar ist oder in einem Fundament in horizontaler Lage verankerbar ist, und dass der Durchmesser des Rohrrings (53) der Diagonalen zwischen je zwei der vier Rädern (2) an der Einrichtung entspricht, welche Räder (2) frei um die Vertikalachse schwenkbar sind und eine U-förmige Lauffläche aufweisen, sodass sie, wenn auf den Rohrring (53) gestellt, an diesem geführt sind, sodass die Versorgungseinheit auf dem Rohrring (53) um seine Hochachse schwenkbar ist, und dass mindestens eines der Räder (2) mittels eines Elektromotors (56) mit zugehöriger speicherprogrammierbarer elektronischer Steuerungseinheit (69) antreibbar ist ist, sodass die Versorgungseinheit mittels des Radantriebes abhängig von Kalenderdatum und Tageszeit dem Sonnenstand nachführbar ist.

8. Versorgungseinheit für Strom und Wasser auf der Basis von erneuerbaren Energien nach einem der vorangehenden Ansprüche, ***dadurch gekennzeichnet,* dass** das zentrale Solarpanel mittels hydraulischer Kolben-Zylindereinheiten oder elektromotorisch in seiner Schwenklage veränderbar ist, und dass die Steuerung dieser Kolben-Zylindereinheiten oder Elektromotoren mittels GPS-Daten erfolgt, sodass für jede Stelle auf der Erde die optimale Nachführung der Versorgungseinheit an den Sonnenstand gewährleistbar ist.

9. Versorgungseinheit für Strom und/oder Wasser auf der Basis von erneuerbaren Energien nach einem der vorangehenden Ansprüche, ***dadurch gekennzeichnet,* dass** der Profilrahmen (1) zusätzlich ein Modul zur Erzeugung von Wasserstoff und Sauerstoff mittels Elektrolyse von Wasser enthält, sowie Brennstoffzellen zur späteren Erzeugung von Gleichstrom durch Verbrennung.

10. Versorgungseinheit für Strom und/oder Wasser auf der Basis von erneuerbaren Energien nach einem der vorangehenden Ansprüche, ***dadurch gekennzeichnet,* dass** der Profilrahmen (1) einen Kubus mit einer Seitenlänge von 1m bildet, für dem raumsparenden Transport in normierten Luftfracht-Containern.

## Claims

1. A supply unit for electric power and/or water derived from renewable energies, with solar panels (6) for generating electrical current and accumulators for storing of the generated electrical current, ***characterized in that*** the unit comprises a lower box type profile frame (1), above which a further upper box type profile frame (16) rests with equal ground surface and whose profiles form a quadrangle on its top side (3) which contains a solar panel (7), and said box type profile frame (16) being swivelable upwards about a common horizontal axis with the lower profile frame (1), whereby on each of the four upper profiles of the upper profile frame (16), a further profile frame (5) is attached which comprises a solar panel (6), so that these solar panels (5) are swivelable from a transportation state in which they lay sidewardly at the box type profile frame (16) and form the side surfaces of a cube, and these solar panels (5) are swivelable up into the plane of the upper side of this box type frame (16) to form a cross-shaped arrangement of solar panels that may tilt to an inclination of about 60° about a common horizontal axis on the profile frame (1), and fixable at any position, and that in the interior of the box type profile frame (1), modules (24,25,26) are retractably arranged which work as interfaces and which comprise drawer-like profile frames which are enclosed with plates on their sides and having punched bottoms, of which modules one module (25) comprises a battery and an electronic system for controlling the entire supply unit, as well as an inverter for transforming of the accumulated direct current into 100V or 220V alternating current, and a further module (24) with an electrical water pump (41) with its electrical motor (42), for pumping of water out of a water source and for conveying the water on at least 820psi through a two-stage filtering installation of paper and textile filters and a subsequent ceramic filter, so that the supply unit offers selectively at least the following operating modes:
• Generating of electrical energy out of solar light, and storing or delivering the same as alternative current, or
• Generating of electrical energy out of solar light, and pumping of water from standing or flowing waters or ground water and purifying the same by filtering.

2. Supply unit for electric power and/or water derived from renewable energies according to claim 1, **characterized in that** the box type profile frame (1) comprises a modul (26) which contains a telescopic pole or a pole, built from several segments or an openable vertical pole (10) is arranged, on which a wind mill (11) with blades (12), generator (17) and wind tail elements (15) can be mounted, for additionally generating and supply electrical current produced from wind energy.

3. Supply unit for electric power and/or water derived from renewable energies according to any of the preceding claims, **characterized in that** the profile frame (1) is equipped with wheels (2) of which at least two are freely directed.

4. Supply unit for electric power and/or water derived from renewable energies according to any of the preceding claims, **characterized in that** the box like modules (24-26) are drawer-like and fittingly pushable into the interior of the profile frame (1) and therein securable.

5. Supply unit for electric power and/or water derived from renewable energies according to any of the preceding claims, **characterized in that** the filtering installation (47) for the conveyed water comprises in addition an UV-treatment unit or a reverse-osmosis system (49) for purifying the conveyed water to drinking water.

6. Supply unit for electric power and/or water derived from renewable energies according to any of the preceding claims, **characterized in that** the upper box type profile frame (4), which can be swiveled about the horizontal axis (8), is supported by two gas springs (21) opposite the lower box type profile frame (1), wherein adjusting supports are placed between the upper box type profile frame (4) and the lower box type profile frame (1), by means of which the swiveled position of the upper profile frame (4) can be locked for every position, and the profile frame (5) for t6he solar panels (6) is propped up by two gas springs at the lower edges of the top profile frame (4).

7. Supply unit for electric power and/or water derived from renewable energies according to any of the Claims 3 to 6, **characterized in that** it includes an accompanying horizontal tubular ring (53), which stands on at least three height adjustable props (55) and can be levelled horizontally on an underground or can be anchored in a horizontal position on a base, and that the diameter of the tubular ring (53) corresponds with the diagonals between two of the four wheels (2) respectively of the equipment, said wheels(2) having a U-shaped running surface, so that the supply unit on the tubular ring (53) can be swiveled about its normal axis, and that at least one of the wheels (2) can be driven by an electric motor (56) and that the electronic control unit (69) is programmable logic controlled, so that the supply unit can be tracked according to the position of the sun by means of the wheel drive, depending on the date on the calendar and the time of the day.

8. Supply unit for electric power and/or water derived from renewable energies according to any of the preceding Claims, **characterized in that** the central solar panel can be changed in its swiveled position by means of the hydraulic piston-cylinder units or through the electric motor, and that control of these piston-cylinder units or electric motors takes place through GPS data, so that optimal tracking of the supply unit in accordance with the sun's position can be guaranteed at any place on earth.

9. Supply unit for electric power and/or water derived from renewable energies according to any of the preceding Claims, **characterized in that** the profile frame (1) comprises an additional module for the production of hydrogen and oxygen by an electrolysis of water, as well as fuel cells for the later production of direct current by combustion.

10. Supply unit for electric power and/or water derived from renewable energies according to any of the preceding Claims, **characterized in that** the profile frame (1) forms a cube with a side length of 1 m, for the space-saving transportation in normed airfreight containers.

## Revendications

1. Unité d'alimentation en courant et/ou en eau sur la base d'énergies renouvelables, comprenant des panneaux solaires (6) pour la production de courant électrique et des accumulateurs pour stocker le courant électrique produit, **caractérisé en ce que** ladite unité comprend un cadre de profilé (1) inférieur en forme de boîte sur lequel repose un autre cadre de profilé (16) supérieur avec une surface de base identique, dont les profilés forment en haut un rectangle, lequel cadre de profilé encadre un panneau solaire (7) et lequel cadre de profilé (16) supérieur peut être pivoté vers le haut autour d'un axe horizontal commun au cadre de profilé (5) inférieur; où un autre cadre de profilé (5) est articulé à chaque fois aux quatre profilés supérieur du cadre de profilé supérieur (16) avec un panneau solaire (6) qui est encadré par ledit cadre de profilé de manière à ce que ces panneaux solaires (6) puissent être pivotés vers le haut à partir d'une position de transport, dans laquelle lesdits panneaux sont appliqués latéralement au cadre de profilé en forme de boîte et lesdits panneaux solaires forment la surface latérale d'un tube et de manière à ce que ces panneaux solaires réalisent une disposition de panneaux solaires cruciformes avec le panneau solaire (7), laquelle disposition peut être pivotée autour de l'axe horizontal commun sur le cadre de profilé (1) jusqu'à 60° et peut être arrêtée à chaque position, et **caractérisée en ce que** ces panneaux solaires sont encastrés de façon intercalable dans l'intérieur du cadre de profilé (1) en forme de boîte des modules (24, 25, 26) servant d'interface, lesquels modules présentent un cadre de profilé de type tiroir avec un fond perforé, lequel cadre est encadré latéralement par des plaques, où un module (25) comporte une batterie et une électronique destinée à commander tout l'unité d'alimentation, ainsi qu'un transformateur pour la transformation du courant continu accumulé en un courant alternatif de 110 V ou de 220 V et où un autre module (24) comporte une pompe d'eau (41) électrique, laquelle pompe est destinée à pomper de l'eau à partir d'une source d'eau et pour transporter cette eau à au moins 820 psi à travers une installation de filtration comportant deux étages composés en premier lieu d'un filtre en papier ou en matière textile et composés ensuite d'un filtre en céramique de manière à ce que l'unité d'alimentation offre au moins les modes de fonctionnement suivants:
• production de l'énergie électrique à partir de la lumière du soleil, puis stockage ou délivrance de ladite énergie sous forme de courant électrique alternatif, ou,
• production de l'énergie électrique à partir de la lumière du soleil et pompage de l'eau à partir d'eau stagnante, d'eau courante ou d'eau provenant des nappes phréatiques et traitement de cette eau par filtration.

2. Unité d'alimentation en courant et/ou en eau sur la base d'énergies renouvelables selon la revendication 1, **caractérisée en ce que** le cadre de profilé (1) en forme de boîte comprend un module (26) contenant un mât (10) vertical qui est déployé de façon télescopique ou un mât vertical constitué de plusieurs sections qui peut être assemblé ou qui se déplie sur lequel est monté une roue à vent (11) doté d'ailes (12), d'un générateur (17) et d'éléments de guide de vent (15) qui peut être aussi logé dans ce module (26) pour fournir et stocker du courant électrique supplémentaire généré par le vent.

3. Unité d'alimentation en courant et/ou en eau sur la base d'énergies renouvelables selon une des revendications précédentes, **caractérisée en ce que** le cadre de profilé (1) est équipé de roues (2) dont deux au moins possède une articulation libre.

4. Unité d'alimentation en courant et/ou en eau sur la base d'énergies renouvelables selon une des revendications précédentes, **caractérisée en ce que** les modules (24-26) en forme de boîte peuvent être glissés à l'intérieur du cadre de profilé (1) comme des tiroirs et montés de façon très précise dans ces cadres de profilé (1) et peuvent être sécurisés dans ces cadres de profilé.

5. Unité d'alimentation en courant et/ou en eau sur la base d'énergies renouvelables selon une des revendications précédentes, **caractérisé en ce que** le dispositif de filtration (47) comprend, en plus, une installation de traitement par des rayons UV ou une installation d'osmose inversée pour l'eau transportée afin de traiter l'eau transportée de manière à ce qu'elle deviennent de l'eau potable.

6. Unité d'alimentation en courant et/ou en eau sur la base d'énergies renouvelables selon une des revendications précédentes, **caractérisée en ce que** le cadre de profilé (4) supérieur, en forme de boîte et qui pivote autour de l'axe horizontal s'appuie par rapport au cadre de profilé (1) inférieur en forme de boîte au moyen de deux ressort à gaz (21); où des supports de réglage sont disposées entre le cadre de profilé (4) supérieur, en forme de boîte et qui tourne autour de l'axe horizontal (8) et entre des profilés de cadre (1) inférieurs en forme de boîte au moyen desquels supports de réglage la position de pivotement du cadre de profilé (4) supérieur peut être arrêtée dans chaque position de pivotement, et les cadres de profilé (5) pour les panneaux solaires (6) sont soutenus à chaque fois avec deux ressorts à gaz (24) sur les bords inférieurs du cadre de profilé (4) supérieur.

7. Unité d'alimentation en courant et/ou en eau sur la base d'énergies renouvelables selon une des revendications 3 jusqu'à 6, **caractérisé en ce qu'**elle comprend un anneau en forme de tube (55) horizontal associé qui tient sur au moins trois supports (55) réglables en hauteur et qui peut être nivelé horizontalement sur un support ou ancré dans une fondation dans sa position horizontale , et **en ce que** le diamètre de l'anneau tubulaire (53) correspond aux diagonales entre chacune des deux roues (2) sur le dispositif, lesquelles roues (2) peuvent être pivotées librement autour de l'axe vertical et présentent une surface de contact en forme de U, afin que l'unité d'alimentation puisse être pivotée sur l'anneau tubulaire (53) autour de son axe supérieure et qu'au moins une des roues (2) puisse être entraînée au moyen d'un moteur électrique (56) avec une unité de commande (69) électronique programmable à partir d'une mémoire associée et pour que l'unité d'alimentation puisse être alignée à la position du soleil au moyen de l'entraînement de la roue en fonction de la date du calendrier et de l'heure.

8. Unité d'alimentation en courant et/ou en eau sur la base d'énergies renouvelables selon une des revendications précédentes, **caractérisée en ce que** la position de pivotement du panneau solaire central puisse être modifié au moyen d'unités piston - cylindre hydrauliques ou électro motorisées et **en ce que** la commande de ces unités piston - cylindre ou de ces électromoteurs se déroule au moyen de données fournies par un GPS, pour que l'on assure pour chaque endroit sur la terre le suivie optimale de l'unité d'alimentation selon la position du soleil.

9. Unité d'alimentation en courant et/ou en eau sur la base d'énergies renouvelables selon une des revendications précédentes, **caractérisée en ce que** le cadre de profilé (1) comprend, en outre, un module pour la production d'hydrogène et d'oxygène au moyen d'une électrolyse de l'eau et ladite unité d'alimentation comprend aussi des cellules de combustion pour la production ultérieure de courant continu par combustion.

10. Unité d'alimentation en courant et/ou en eau sur la base d'énergies renouvelables selon une des revendications précédentes, **caractérisée en ce que** le cadre de profilé (1) forme un cube avec une longueur latérale d'1m pour être transporté de façon peu encombrante dans des containers de fret aérien normalisés.
